# EUROPEAN PATENT SPECIFICATION

(11) **EP 1 209 391 B1**
(45) Date of publication and mention of the grant of the patent: **20.10.2004**
(21) Application number: 01500273.6
(22) Date of filing: 19.11.2001
(51) Int. Cl.: F16K 5/06

(54) **A valve with filter**
Hahn mit einem Filter
Robinet avec un élément de filtre

(30) Priority: 23.11.2000 ES 200002804
(43) Date of publication of application: 29.05.2002
(73) Proprietor: Genebre, S.A., 08908 l'Hospitalet de Llobregat (Barcelona) (ES)
(72) Inventor: Monterde Fabregat, Lluis, c/o Genebre, S.A., 08908 L'Hospitalet de Llobregat(Barcel.) (ES)
(74) Representative: Pastells Teixido, Manuel

(56) References cited:
- DE-A- 2 929 480
- FR-A- 1 462 437
- US-A- 5 188 335

## Description

This valve with filter is preferably related to those valves being of the so-called ball valve type because the shutoff member is of a generally spherical shape. When incorporating a filter this type of valves must be manufactured with a given particular construction generally determining a bulkier and complex construction for the valve.

In order to obtain a valve with filter being of normal dimensions and of a svery simple and less cost-intensive construction, the filter has been incorporated inside the very shutoff ball member, the filter having a generally cylindrical makeup and being fitted to the shutoff ball member in order to thus be turned together with this latter. A valve having these features is known, for example, from the French patent no. 1.462.437.

This invention has as its object a valve with filter having as a characterising feature the makeup of the filter, this latter being made up of a cylindrical, tubular socket upperly having fitted to it a mesh being initially cylindrical and ending in a half dome determining a front opening at whose lower portion an inclined sheet is fixed which has a concave cross-section and an opening being provided at its rear portion.

Also characteristic of this valve is the fact that its body has a cylindrical, tubular branch housing the filter socket and being capped with a cap which when removed allows to clean the filter.

These and other characteristics will be best made apparent by the following detailed description whose understanding will be made easier by the accompanying sheet of drawings showing a practical embodiment cited only by way of an example not limiting the scope of the present invention.

In the drawings:
Fig. 1 illustrates the valve assembly in a sectional elevation;
Fig. 2 shows in a perspective view the longitudinally sectioned valve assembly; and
Fig. 3 is a perspective view of the filter being incorporated to the valve.

According to the drawings the valve comprises a body 1 with the inlet opening 2 and being fitted at the opposite side with the outlet opening 3.

This valve is centrally provided with the shutoff member 4 being embodied as per a generally spherical embodiment and being housed between seats 5 and 6.

The filter 7 is incorporated inside this shutoff ball member and is made up of a lower socket 8 being made of plastics material and being embodied as per a cylindrical and tubular embodiment and having upperly fitted to it a mesh 9 being arranged in a transversal arrangement with respect to the flowing direction of the fluid, said mesh being initially cylindrical and upperly forming a half dome determining a front opening 10 at whose lower portion an inclined sheet 11 is fixed which has a concave cross-section and an opening 12 being provided at its rear portion.

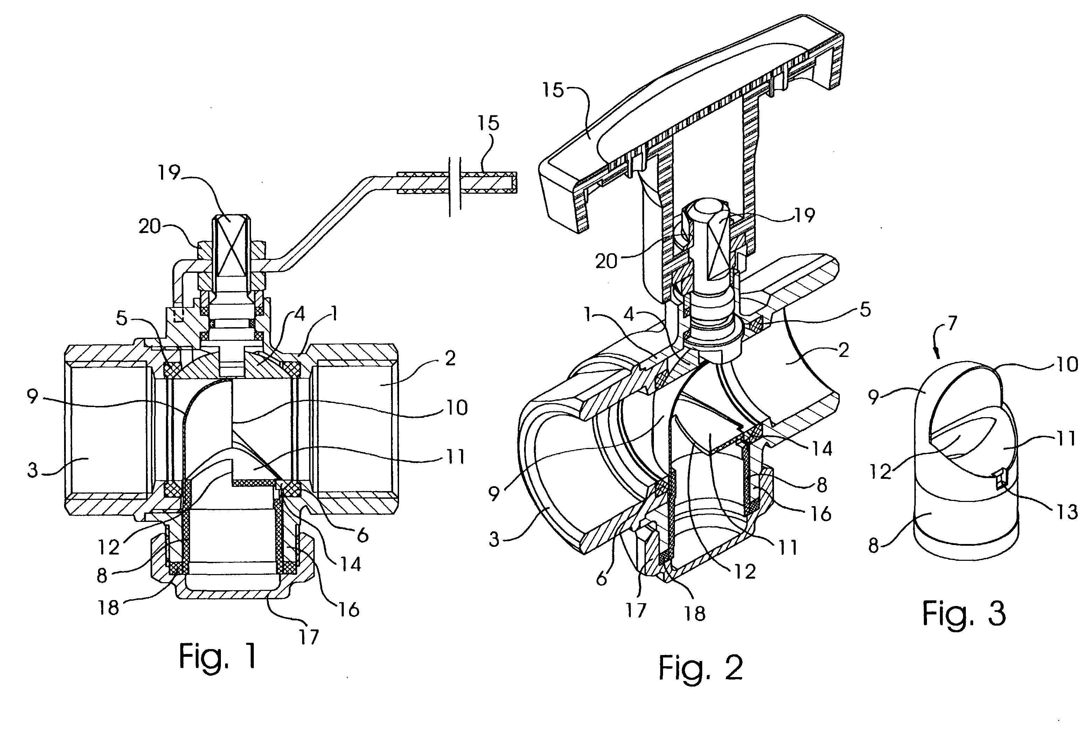

This filter 7 is fitted to the shutoff ball member 4 by means of fitting into a peripheral recess 13 of the filter (Fig. 3) a protrusion 14 being provided on the shutoff member. With this fitting the filter is turned together with the shutoff ball member.

At its lower portion being opposite to the control handle 15 the valve body 1 is provided with a cylindrical, tubular branch 16 housing the filter socket 8 and being capped with a threaded cap 17 with the intermediary of a ring seal 18.

The handle 15 being of the radial type (Fig. 1) or of the butterfly type (Fig. 2) is secured to the spindle 19 being fitted to the shutoff ball member 4 by means of a nut 20.

The fluid flows in through the opening 2 to thereupon flow through the mesh 9 and out through the opening 3 in a filtered condition. The retained particles fall down through the opening 12 and towards the cavity formed by the socket 8, the sheet 11 and the cap 17, and are then deposited on this latter.

## Claims

1. A valve with filter wherein the shutoff member (4) is of the ball type and comprises the filter (7) being incorporated in its inside, said filter having a generally cylindrical makeup being apt to be fitted to the shutoff ball member (4) to thus be turned together with this latter, the filter (7) and the shutoff ball member (4) being fitted to each other by means of a protrusion (14) of said member being apt to fit into a recess (13) of the periphery of the filter (7); said valve with filter being **characterised in that** the filter (7) comprises a cylindrical, tubular socket (8) upperly having fitted to it a mesh (9) being initially cylindrical and ending in a half dome determining a front opening (10).

2. A valve with filter as per claim 1, **characterised in that** the opening (10) of the mesh (9) has its lower portion fixedly fitted with an inclined sheet (11) of concave cross-section, said sheet having an opening (12) at its rear portion.

3. A valve with filter as per claim 1, **characterised in that** the valve body has a cylindrical, tubular branch (16) housing the socket (8) of the filter (7), said branch being capped with a removable cap (17).

## Patentansprüche

1. Ventil mit Filter worin das Absperrorgan (4) kugelartig ist und das darin eingebaute Filter (7) umfaßt, wobei das besagte Filter eine allgemein zylindrische, zur gegenseitigen Kopplung mit dem kugelartigen Absperrorgan (4) geeignete Gestaltung hat und sich deswegen zusammen mit diesem letzteren drehen läßt, wobei das Filter (7) und das Absperrorgan (4) gegenseitig durch einen in eine am Umfang des Filters (7) vorgesehene Aussparung (13) einsteckbaren Vorsprung (14) gekoppelt werden; wobei das obengenannte Ventil mit Filter **dadurch gekennzeichnet ist, daß** das Filter (7) einen zylindrischen, rohrförmigen Sockel (8) umfaßt auf dessen oberen Bereich ein Sieb (9) aufgesteckt ist, das anfänglich zylindrisch ist und in einem Halbdom endet, der eine frontale Öffnung (10) aufweißt.

2. Ventil mit Filter nach Anspruch 1, **dadurch gekennzeichnet, daß** im unteren Bereich der im Sieb (9) vorgesehenen Öffnung (10) ein geneigtes Blech (11) mit konkavem Querschnitt fest angebracht ist, wobei das besagte Blech eine Öffnung (12) in seinem hinteren Bereich hat.

3. Ventil mit Filter nach Anspruch 1, **dadurch gekennzeichnet, daß** der Ventilkörper eine zylindrische, rohrförmige Abzweigung (16) hat, die den Sockel (8) des Filters (7) aufnimmt, wobei die besagte Abzweigung mit einer abnehmbaren Kappe (17) verschlossen wird.

## Revendications

1. Une vanne avec filtre dont l'élément de fermeture (4) est du type boule et comprend le filtre (7) qui est incorporé dans son intérieur, ledit filtre ayant une constitution gnénéralement cylindrique qui est apte à être accouplée à l'élément de fermeture à boule (4) pour ainsi être tourné ensemble avec celui-ci, le filtre (7) et l'élément de fermeture à boule (4) étant accouplés l'un à l'autre au moyen d'une saillie (14) dudit élément étant apte à s'emboîter dans une encoche (13) de la périphérie du filtre (7); ladite vanne avec filtre étant **caractérisée en ce que** le filtre (7) comprend un socle (8) cylindrique tubulaire ayant accouplée à sa partie supérieure une maille (9) étant initialement cylindrique et finissant par un demi-dôme qui détermine une ouverture frontale (10).

2. Une vanne avec filtre d'après la revendication 1, **caractérisée en ce que** l'ouverture (10) de la maille (9) a sa partie inférieure fixement munie d'une lame inclinée (11) à section transversale concave, ladite lame ayant une ouverture (12) dans sa partie arrière.

3. Une vanne avec filtre d'après la revendication 1, **caractérisée en ce que** le corps de la vanne a une branche (16) tubulaire cylindrique qui loge le socle (8) du filtre (7), ladite branche étant bouchée avec un bouchon détachable (17).
